# EUROPÄISCHE PATENTSCHRIFT

(11) **EP 2 992 231 B1**
(45) Veröffentlichungstag und Bekanntmachung des Hinweises auf die Patenterteilung: **11.04.2018**
(21) Anmeldenummer: 14715536.0
(22) Anmeldetag: 27.02.2014
(51) Int. Cl.: F16C 29/02, F16C 32/06

(54) **HYDROSTATISCHE PROFILSCHIENENFÜHRUNG**
HYDROSTATIC PROFILED RAIL GUIDE
DISPOSITIF DE GUIDAGE HYDROSTATIQUE DE RAIL PROFILÉ

(30) Priorität: 29.04.2013 DE 102013207782
(43) Veröffentlichungstag der Anmeldung: 09.03.2016
(73) Patentinhaber: Schaeffler Technologies AG & Co. KG, 91074 Herzogenaurach (DE)
(72) Erfinder: BAUER, Wolfgang, 66292 Riegelsberg (DE); RUDY, Dietmar, 66501 Kleinbundenbach (DE)
(86) Internationale Anmeldenummer: PCT/DE2014/200096
(87) Internationale Veröffentlichungsnummer: WO 2014/177142

(56) Entgegenhaltungen:
- EP-A1- 2 133 580
- DE-A1- 19 648 594
- DE-A1-102006 027 844
- DE-A1-102008 056 965
- GB-A- 2 250 550
- US-B1- 6 498 127

## Beschreibung

Die vorliegende Erfindung betrifft eine hydrostatische Profilschienenführung, die einen auf einer Führungsschiene längsverschieblich angeordneten Führungswagen aufweist.

Aus DE102005038346 A1 oder DE 196 48 594 A1 ist ein Verfahren zur Herstellung einer hydrostatischen Profilschienenführung nach den Merkmalen des Oberbegriffs des Anspruchs 1 bekannt geworden.

Aufgabe der Erfindung war es, ein Verfahren für eine verbesserte hydrostatische Profilschienenführung anzugeben.

Erfindungsgemäß wurde diese Aufgabe durch ein Verfahren zur Herstellung einer hydrostatischen Profilschienenführung gemäß Anspruch 1 gelöst. Die an dem Führungswagen ausgebildeten Taschenflächen sind mit einer ersten Beschichtung versehen, die aus einer Cu/Sn-Legierung besteht. Es hat sich herausgestellt, dass die lediglich aus den beiden Komponenten Kupfer (Cu) und Zinn (Sn) gebildete erste Beschichtung gute Eigenschaften als hydrostatische Taschenfläche ermöglicht. Die aus diesen beiden Komponenten gebildete Legierung kann herstellungsbedingt Verunreinigungen mit Fremdstoffen beinhalten. Diese erste Beschichtung wird hochgenau mit der geforderten Oberflächenqualität galvanisch aufgebracht und anschließend geschliffen, so dass etwas von der Schichtdicke der aufgebrachten Beschichtung abgetragen wird. Durch den galvanischen Auftragungsprozess bedingte Oberflächen- und Schichtdickenungenauigkeiten werden durch Anschleifen beseitigt. Der Führungswagen einer erfindungsgemäßen hydrostatischen Profilschienenführung weist Drucktaschen auf, um die herum die Taschenflächen des Führungswagens angeordnet ist. Die Taschenflächen des Führungswagens und die Schienenlauffläche der Führungsschiene begrenzen einen Hydraulikspalt oder Lagerspalt, durch den Hydraulikflüssigkeit abströmen kann, die in den Drucktaschen unter Druck bereitgestellt ist, um den Führungswagen hydrostatisch auf der Führungsschiene zu lagern. Wenn der Führungswagen entlang der Führungsschiene verschoben wird, bleibt der Lagerspalt konstant.

Ein weiterer Vorteil kann darin gesehen werden, dass mit der erfindungsgemäßen hydrostatischen Profilschienenführung hervorragende Notlaufeigenschaften gewährleistet sind. Wenn der Fall eintritt, dass der für den einwandfreien Betrieb erforderliche hydrostatischeTaschendruck zusammenbricht, kann der Lagerspalt zwischen der Führungsschiene und dem Führungswagen nicht aufrecht erhalten werden. Der Führungswagen kann unter äußerer Belastung stehen und mit seinen Taschenflächen auf der Führungsschiene aufsetzen. Die erfindungsgemäße erste Beschichtung ist eine Zinn-Bronze, die hervorragende Gleiteigenschaften auf der oftmals geschliffenen Mantelfläche der aus Stahl gebildeten Führungsschiene aufweist. Demzufolge ist auch bei Wegfall des hydrostatischen Drucks eine Notlaufeigenschaft gewährleistet, so dass der Führungswagen entlang der Führungsschiene bewegt werden kann.

Wenn die Cu/Sn-Legierung für die erste Beschichtung aus Cu mit 12 bis 14 Gewichtsprozent Sn besteht, sind besonders gute Notlaufeigenschaften sicher gestellt. In dieser erfindungsgemäßen Legierung können herstellungsbedingte Verunreinigungen enthalten sein.

Für eine optimale Haftung dieser in vorteilhafter Weise galvanisch aufgebrachten ersten Beschichtung auf den Führungswagen ist es vorteilhaft, zunächst eine zweite Beschichtung aus Kupfer auf den Führungswagen galvanisch aufzutragen; die Schichtdicke dieser zweiten Beschichtung kann deutlich dünner sein als die Schichtdicke der ersten Beschichtung aus Cu/sn.

Der Führungswagen der erfindungsgemäßen hydrostatischen Profilschienenführung weist in vorteilhafter Weiterbildung einen aus Stahl gebildeten Tragkörper und stirnseitig an den Tragkörper angebrachte Kopfstücke auf. An dem aus Stahl gebildeten Tragkörper sind die Drucktaschen mit den um die Drucktaschen herum angeordneten Taschenflächen ausgebildet; die erste Beschichtung kann auf eine zweite Beschichtung aus Cu aufgebracht sein, wobei die zweite Beschichtung auf den Stahl des Tragkörpers aufgebracht ist. In diesem Fall dient die vorzugsweise galvanisch aufgebrachte zweite Beschichtung als idealer Träger der vorzugsweise galvanisch aufgebrachten ersten Beschichtung.

Die auf den Stahl des Tragkörpers aufgebrachte Beschichtung sieht bei einer Ausgestaltung der Erfindung eine Schichtdicke von 14 µm bis einschließlich 16 µm vor. Diese Schichtdicke bezieht sich auf die auf den Stahl des Grundkörpers aufgebrachte Beschichtung, also auf die Schichtdicke der ersten Beschichtung einschließlich der - sofern vorhanden -zweiten Beschichtung.

Die erste Beschichtung aus Cu/Sn kann vorzugsweise eine Schichtdicke von etwa 70 - 80 µm aufweisen. Diese erste Beschichtung kann dann im Schleifverfahren soweit geschliffen werden, dass eine einwandfreie Oberfläche der Taschenflächen gewährleistet ist, die zugleich als Notlaufflächen ausgebildet sind. Die Gesamtschichtdicke der ersten und der zweiten galvanisch aufgebrachten Beschichtung beträgt bei einer erfindungsgemäßen Weiterbildung nach dem Schleifen der ersten Beschichtung 14 µm bis 16µm, wobei eine Gesamtschichtdicke von 15µm angestrebt ist.

Nachstehend wird die Erfindung anhand eines in vier Figuren abgebildeten Ausführungsbeispieles näher erläutert. Es zeigen:
- Figur 1: eine erfindungsgemäße hydrostatische Profilschienenführung in perspektivischer Darstellung,
- Figur 2: einen Querschnitt durch die hydrostatische Profilschienenführung gemäß Figur 1,
- Figur 3: in schematischer Darstellung einen Beschichtaufbau des Führungswagen der Profilschienenführung gemäß der Erfindung und
- Figur 4: in schematischer Darstellung einen Längschnitt einer erfindungsgemäßen hydrostatische Profischienenführung.

Die in den beiden Figuren abgebildete hydrostatische Profischienenführung weist einen auf einer Führungsschiene 1 längsverschieblich geführten Führungswagen 2 auf. Der Führungswagen 2 hat einen Rücken 3 und an seinen beiden Längsseiten entlang der Führungsschiene 1 angeordnete Schenkel 4, mit denen der Führungswagen 2 die Führungsschiene 1 teilweise umgreift.

Der Führungswagen 2 besteht im wesentlichen aus einem aus Stahl gebildeten Tragkörper 5, und aus zwei zu beiden Stirnseiten des Tragkörpers 5 angeordneten Kopfstücken 6. An die Kopfstücke 6 sind nicht abgebildete Schläuche angeschlossen, durch die Hydraulikflüssigkeit gepumpt wird. Die Hydraulikflüssigkeit wird über nicht weiter abgebildete, im Inneren des Führungswagens 2 vorgesehene Kanäle geleitet, um hydrostatische Druckpolster zwischen dem Führungswagen und der Führungsschiene aufzubauen.

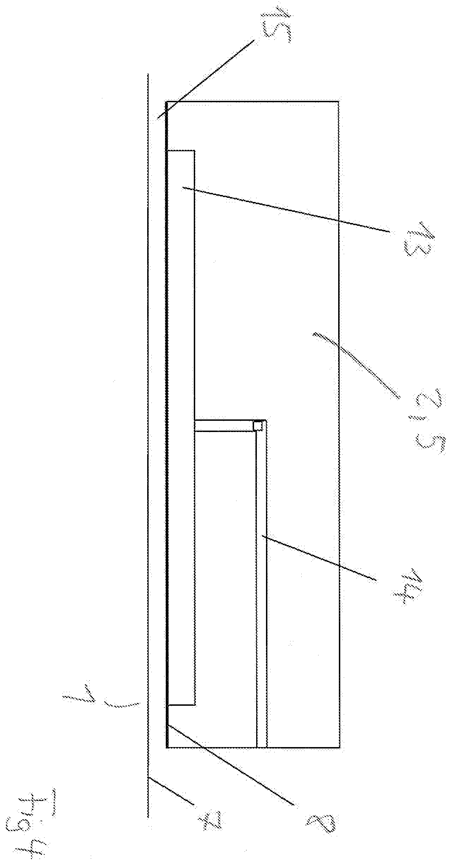

Figur 4 zeigt im Längsschnitt die angedeutete Führungsschiene 1 und den darauf hydrostatisch gelagerten Führungswagen 2. Die Führungsschiene 1 ist mit Schienenlaufflächen 7 versehen. Der Tragkörper 5 ist an seinen den Schienenlaufflächen 7 zugewandten Seiten mit Drucktaschen 13 versehen, in denen unter Druck stehende Hydraulikflüssigkeit bereit gestellt ist. Die Hydraulikflüssigkeit gelangt über Druckleitungen 14 in die Drucktaschen 13. Die Drucktaschen 13 sind von Taschenflächen 8 umgeben, die gemeinsam mit den Schienenlaufflächen 7 Lagerspalte 15 begrenzen.

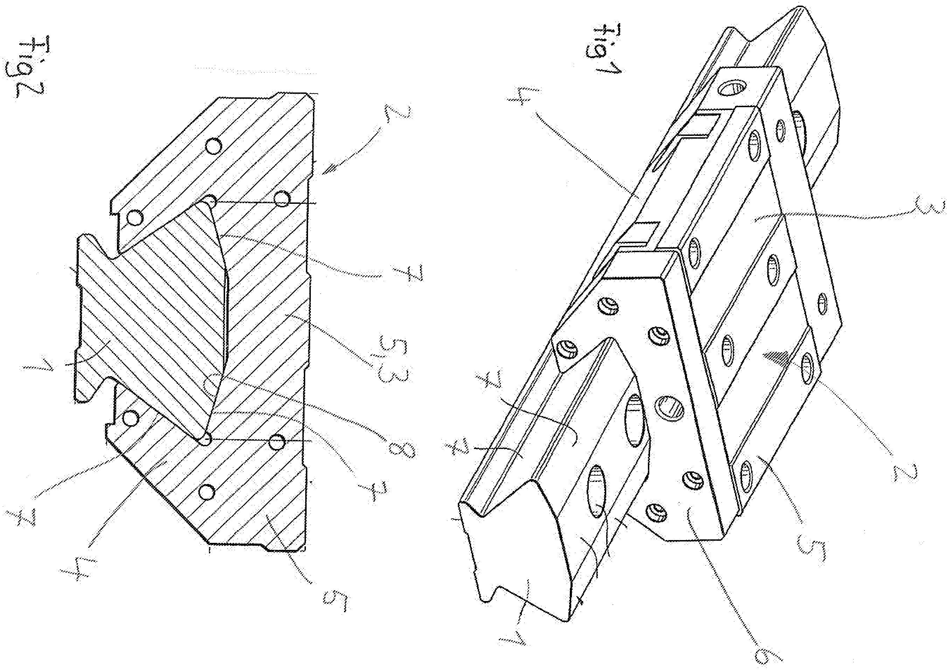

Figur 2 zeigt im Querschnitt die Taschenflächen 8 des Führungswagens 2 und die Schienenlaufflächen 7 der Führungsschiene 1. Die Figur 2 zeigt insgesamt vier Schienenlaufflächen 7, zwei an der Schienenoberseite, zwei an der Schienenunterseite, sowie korrespondierende Taschenflächen 8. Von jeder dieser Taschenflächen 8 können mehrere hintereinander entlang der Längsachse der Führungsschiene 1 angeordnet sein.

Von den vier an dem Tragkörper 5 des Führungswagens 2 ausgebildeten Taschenflächen 8 sind zwei an der der Führungsschiene 1 zugewandten Seite des Rückens 3 und zwei an je einem der beiden Schenkel 4 an deren der Führungsschiene 1 zugewandten Seite ausgebildet.

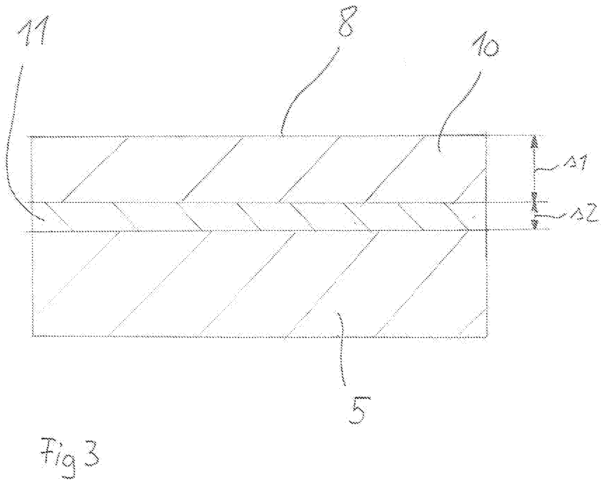

Der aus Stahl gebildete Tragkörper 5 ist im Bereich seiner Taschenflächen 8 beschichtet. Figur 3 zeigt schematisch den Schichtaufbau: die Taschenfläche 8 selbst ist durch eine erste Beschichtung 10 gebildet, die aus einer Cu/Sn Legierung gebildet ist. Diese erste Beschichtung 10 ist galvanisch auf eine zweite Beschichtung 11 aus Kupfer aufgebracht. Diese zweite Beschichtung 11 ist auf den Stahl des Tragkörpers 5 galvanisch aufgebracht.

Die Drucktaschen 13 und die Taschenflächen 8 sind im Ausführungsbeispiel mit den erfindungsgemäßen Beschichtungen versehen. Alternativ ist denkbar, die Drucktaschen abzudecken, so dass lediglich die Taschenflächen 8 beschichtet werden.

Die Schichtdicke s2 der zweiten Beschichtung 11 beträgt zwischen 3 bis 5 µm. Die Schichtdicke s1 der ersten Beschichtung 10 bis 13 µm. Beide Beschichtungen zusammen weisen eine Schichtdicke von 15 µm +/- 1µm auf.

Die gesamte Schichtdicke kann deutlich oberhalb von 15µm liegen. In diesem Fall wird die zweite Beschichtung soweit geschliffen, dass ein vorgegebenes Spaltmaß zwischen Führungswagen 2 und der Führungsschiene 1 einwandfrei eingestellt ist.

### Bezugszeichenliste

- 1.: Führungsschiene
- 2.: Führungswagen
- 3.: Rücken
- 4.: Schenkel
- 5.: Tragkörper
- 6.: Kopfstück
- 7.: Schienenlauffläche
- 8.: Taschenfläche
- 9.: ---
- 10.: erste Beschichtung
- 11.: zweite Beschichtung
- 12.: -----
- 13.: Drucktasche
- 14.: Druckleitung
- 15.: Lagerspalt

## Patentansprüche

1. Verfahren zur Herstellung einer hydrostatischen Profilschienenführung, mit einem auf einer Führungsschiene (1) längsverschieblich angeordneten, hydrostatisch gelagerten Führungswagen (2), wobei der Führungswagen (2) mit Drucktaschen (13) und um die Drucktaschen (13) herum angeordneten Taschenflächen (8) versehen ist, und wobei die Führungsschiene (1) an ihren den Drucktaschen (13) zugewandten Seiten mit Schienenlaufflächen (7) zur hydrostatischen Lagerung des Führungswagens (2) auf der Führungsschiene (1) versehen ist, **dadurch gekennzeichnet, dass** die an dem Führungswagen (2) ausgebildeten Taschenflächen (8) mit einer ersten Beschichtung (10) versehen sind, die aus einer Cu/Sn-Legierung besteht, die galvanisch aufgetragen und anschließend im Schleifverfahren geschliffen wird.

2. Verfahren zur Herstellung einer hydrostatischen Profilschienenführung nach Anspruch 1, wobei die zweite Beschichtung (11) aus Kupfer galvanisch aufgetragen wird, und danach die erste Beschichtung (10) aus Cu/Sn galvanisch aufgetragen wird.

3. Verfahren nach Anspruch 1, mit dem die galvanisch aufgetragene erste Beschichtung (10) eine Schichtdicke aufweist, die größer als 15µm ist, wobei die erste Beschichtung im Schleifverfahren so weit geschliffen wird, dass eine Gesamtschichtdicke von 14 µm bis 16µm eingestellt ist.

4. Verfahren nach Anspruch 3, wobei diese Gesamtschichtdicke die Schichtdicke einer zweiten Beschichtung (11) beinhaltet.

5. Hydrostatische Profilschienenführung, mit einem auf einer Führungsschiene (1) längsverschieblich angeordneten, hydrostatisch gelagerten Führungswagen (2), wobei der Führungswagen (2) mit Drucktaschen (13) und um die Drucktaschen (13) herum angeordneten Taschenflächen (8) versehen ist, und wobei die Führungsschiene (1) an ihren den Drucktaschen zugewandten Seiten mit Schienenlaufflächen (7) zur hydrostatischen Lagerung des Führungswagens (2) auf der Führungsschiene (1) versehen ist, **dadurch gekennzeichnet, dass** die hydrostatische Profilschienenführung nach einem Verfahren gemäß Anspruch 1 mit folgenden Verfahrensschritten hergestellt ist: die an dem Führungswagen (2) ausgebildeten Taschenflächen (8) sind mit einer ersten Beschichtung (10) versehen, die aus einer Cu/Sn-Legierung besteht, die galvanisch aufgetragen und anschließend im Schleifverfahren geschliffen wird.

6. Hydrostatische Profilschienenführung nach Anspruch 5, deren Cu/Sn-Legierung aus Cu mit 12 bis 14 Gewichtsprozent Sn besteht.

7. Hydrostatische Profilschienenführung nach wenigstens einem der Ansprüche 5 bis 6, deren Führungswagen (2) einen aus Stahl gebildeten Tragkörper (5) mit den daran ausgebildeten Taschenflächen (8) aufweist, wobei die erste Beschichtung (10) auf eine zweite Beschichtung (11) aus Cu aufgebracht ist, wobei die zweite Beschichtung (11) auf den Stahl des Tragkörpers (5) aufgebracht ist.

8. Hydrostatische Probilschienenführung nach Anspruch 7, deren erste Beschichtung (10) und deren zweite Beschichtung (11) zusammen eine Schichtdicke von 14 Mikrometer bis einschließlich 16 Mikrometer aufweisen.

9. Hydrostatische Profilschienenführung nach wenigstens einem der Ansprüche 5 bis 8, deren zweite Beschichtung (11) galvanisch aufgebracht ist.

## Claims

1. Method for producing a hydrostatic profiled rail guide having a hydrostatically mounted guide carriage (2) arranged so as to be longitudinally displaceable on a guide rail (1), wherein the guide carriage (2) is provided with pressure compartments (13) and compartment faces (8) arranged around the pressure compartments (13), and wherein the guide rail (1) is provided, on its sides facing the pressure compartments (13), with rail running faces (7) for hydrostatically mounting the guide carriage (2) on the guide rail (1), **characterized in that** the compartment faces (8) formed on the guide carriage (2) are provided with a first coating (10) that consists of a Cu/Sn alloy that is deposited galvanically and is subsequently polished in a polishing operation.

2. Method for producing a hydrostatic profiled rail guide according to Claim 1, wherein the second coating (11) of copper is deposited galvanically, and thereafter the first coating (10) of Cu/Sn is deposited galvanically.

3. Method according to Claim 1, in which the galvanically deposited first coating (10) has a layer thickness that is greater than 15 µm, wherein the first coating is polished in the polishing operation to such an extent as to achieve a total layer thickness of 14 µm to 16 µm.

4. Method according to Claim 3, wherein this total layer thickness includes the layer thickness of a second coating (11).

5. Hydrostatic profiled rail guide having a hydrostatically mounted guide carriage (2) arranged so as to be longitudinally displaceable on a guide rail (1), wherein the guide carriage (2) is provided with pressure compartments (13) and compartment faces (8) arranged around the pressure compartments (13), and wherein the guide rail (1) is provided, on its sides facing the pressure compartments, with rail running faces (7) for hydrostatically mounting the guide carriage (2) on the guide rail (1), **characterized in that** the hydrostatic profiled rail guide is produced using a method according to Claim 1, having the following method steps: the compartment faces (8) formed on the guide carriage (2) are provided with a first coating (10) that consists of a Cu/Sn alloy that is deposited galvanically and is subsequently polished in a polishing operation.

6. Hydrostatic profiled rail guide according to Claim 5, whose Cu/Sn alloy consists of Cu with 12 to 14 per cent by weight of Sn.

7. Hydrostatic profiled rail guide according to at least one of Claims 5 and 6, whose guide carriage (2) has a supporting body (5) made of steel with the compartment faces (8) formed thereon, wherein the first coating (10) is deposited onto a second coating (11) of Cu, wherein the second coating (11) is deposited onto the steel of the supporting body (5).

8. Hydrostatic profiled rail guide according to Claim 7, whose first coating (10) and whose second coating (11) together have a layer thickness of 14 micrometres up to and including 16 micrometres.

9. Hydrostatic profiled rail guide according to at least one of Claims 5 to 8, whose second coating (11) is deposited galvanically.

## Revendications

1. Procédé de fabrication d'un guide hydrostatique à rail profilé, présentant un chariot de guidage (2) monté de manière hydrostatique et disposé à coulissement longitudinal sur un rail de guidage (1), le chariot de guidage (2) étant doté de poches (13) sous pression et de surfaces de poche (8) disposées autour des poches (13) sous pression,
le rail de guidage (1) étant doté sur ses côtés tournés vers les poches (13) sous pression de surfaces (7) de déplacement sur rail permettant de monter de manière hydrostatique le chariot de guidage (2) sur le rail de guidage (1),
**caractérisé en ce que**
les surfaces de poches (8) formées sur le chariot de guidage (2) sont dotées d'un premier revêtement (10) constitué d'un alliage de Cu/Sn appliqué galvaniquement et ensuite polies dans une opération de polissage.

2. Procédé de fabrication d'un guide hydrostatique à rail profilé selon la revendication 1, dans lequel le deuxième revêtement (11) en cuivre est appliqué galvaniquement, le premier revêtement (10) en Cu/Sn étant ensuite appliqué galvaniquement.

3. Procédé selon la revendication 1, dans lequel le premier revêtement (10) appliqué galvaniquement présente une épaisseur supérieure à 15 µm, le premier revêtement étant poli par une opération de polissage suffisant pour former une couche d'une épaisseur totale de 14 µm à 16 µm.

4. Procédé selon la revendication 3, dans lequel l'épaisseur totale de la couche contient l'épaisseur de la couche d'un deuxième revêtement (11).

5. Guide hydrostatique à rail profilé présentant un chariot de guidage (2) monté de manière hydrostatique et disposé à coulissement longitudinal sur un rail de guidage (1), le chariot de guidage (2) étant doté de poches (13) sous pression et de surfaces de poche (8) disposées autour des poches (13) sous pression,
le rail de guidage (1) étant doté sur ses côtés tournés vers les poches sous pression de surfaces (7) de déplacement sur rail permettant de monter de manière hydrostatique le chariot de guidage (2) sur le rail de guidage (1),
**caractérisé en ce que**
le guide hydrostatique à rail profilé est réalisé en appliquant un procédé selon la revendication 1 qui présente les étapes suivantes :
les surfaces (8) des poches formées sur le chariot de guidage (2) sont dotées d'un premier revêtement (10) constitué d'un alliage de Cu/Sn appliqué galvaniquement et ensuite polies dans une opération de polissage.

6. Guide hydrostatique à rail profilé selon la revendication 5, dont l'alliage de Cu/Sn est constitué de Cu doté de 12 à 14 pourcent en poids de Sn.

7. Guide hydrostatique à rail profilé selon au moins l'une des revendications 5 et 6, dont le chariot de guidage (2) présente un corps de support (5) formé en acier et sur lequel sont formées les surfaces de poches (8), le premier revêtement (10) étant appliqué sur un deuxième revêtement (11) en Cu, le deuxième revêtement (11) étant appliqué sur l'acier du corps de support (5).

8. Guide hydrostatique à rail profilé selon la revendication 7, dont le premier revêtement (10) et le deuxième revêtement (11) présentent ensemble une épaisseur comprise entre 14 micromètres et 16 micromètres inclus.

9. Guide hydrostatique à rail profilé selon au moins l'une des revendications 5 à 8, dont le deuxième revêtement (11) est appliqué galvaniquement.
